# EUROPEAN PATENT APPLICATION

(11) **EP 4 435 752 A1**
(43) Date of publication of application: **25.09.2024**
(21) Application number: 22898757.4
(22) Date of filing: 28.07.2022
(51) Int. Cl.: G08G 1/16, G08G 1/04, G08B 25/10

(54) **SAFETY MANAGEMENT SYSTEM**

(30) Priority: 26.11.2021 KR 20210166126
(71) Applicant: E2 System Inc., Changwon-si, Gyeongsangnam-do 51234 (KR)
(72) Inventor: HWANG, Yun Doh, Changwon-si Gyeongsangnam-do 51238 (KR)
(74) Representative: RGTH
(86) International application number: PCT/KR2022/011099
(87) International publication number: WO 2023/096073

(57) **Abstract**

A safety management system according to the present invention includes: a safety management photographing module photographing a limited area; a safety management detection module detecting an object entering the area and information on the object; a safety management shielding module positioned in the area so as to physically control a movement of the object; a safety management alarm module positioned to be adjacent to the area so as to provide a visual or audible warning alarm; a safety management control module receiving object information from the safety management detection module, setting passage priority for the object on the basis of the object information, and controlling the safety management shielding module and the safety management alarm module according to the set priority so as to restrict passage of an object with a next priority or lower.

## Description

### Technical Field

The present invention relates to a safety management system, which is installed in factories, warehouses, etc., to perform an access control function by photographing limited areas and determining whether objects detected within the photographed area are authorized to enter, as well as to perform a passage restriction function for objects with the next priority or lower by setting the priority of passing objects and controlling physical shield devices and notification devices according to the set priority.

### Background Art

Generally, the movement of work vehicles and pedestrians frequently occurs, in places where goods are transported, such as factories and warehouses. During this movement, when a collision occurs between work vehicles, between a work vehicle and a pedestrian, or between a work vehicle and an item placed in the passageway, it causes not only casualties but also economic losses due to damage to goods.

Therefore, since a safe signaling system is needed to protect work vehicles and workers in places where goods are frequently transported, the present applicant correspondingly submitted an application titled *"*Safety Signal Management Device and Method for Logistics and Vehicle Movement Route (hereinafter referred to as 'Patent Document 1')

The above Patent Document 1 is characterized in performing control so that priority passage is set for work vehicles and pedestrians, and a passenger with priority passage is authorized to pass in the logistics and vehicle movement routes, in order to safely and quickly control the flow of work vehicles and pedestrians due to congestion occurring in limited movement space.

Patent Document 1 has an advantage of using existing sensing equipment to detect situations in the passageway, but needs various types of sensors, as well as vehicle-specific detection equipment, such as a loop coil, which is installed on the ground to detect work vehicles.

Additionally, the vehicle-specific detection equipment has problems that onsite construction as well as maintenance is difficult and time-consuming, and work vehicle traffic must be restricted in the corresponding passageway until maintenance is completed.

For reasons as mentioned above, since multiple detection signals are received through various types of sensors, more complex control algorithms are needed to perform safety management.

In detail, there is a need for the ability to remotely monitor and control complex control algorithms.

### Disclosure

### Technical Problem

In order to solve the above-mentioned problems, an objective of the present invention is to provide a safety management system configured to identify and detect objects in real time through various types of sensors and cameras such as CCTV rather than vehicle-specific detection equipment, and set the entry priority of the detected objects and control physical blocking devices and notification devices according to the set priority, thereby restricting object passage with the next priority or lower.

### Technical Solution

A safety management system according to an embodiment of the present invention includes an intersection safety management means including a safety management photographing module photographing a limited area; a safety management detection module detecting an object entering the area and information on the object; a safety management shielding module positioned in the area so as to physically control a movement of the object; a safety management alarm module positioned to be adjacent to the area so as to provide a visual or audible warning alarm; a safety management control module receiving object information from the safety management detection module, setting passage priority for the object on the basis of the object information, and controlling the safety management shielding module and the safety management alarm module according to the set priority so as to restrict passage of an object with a next priority or lower, a wireless device, which is provide in the object and receives information related to the warning alarm from the safety management control module; and a relay device provided to enable the transmission/reception of information between the safety management control module and the wireless device.

Herein, the relay device multi-connects to one or more wireless communications located in the entry detection area.

The safety management photographing module generates an image frame for the photographing area and calculates image information obtained by linking metadata including time information and location information to the image frame.

The safety management detection module includes a safety management area setting unit provided in the safety management photographing module to form a plurality of detection areas in a photographing area; a safety management object detection unit detecting the object entering the detection areas; a safety management determination unit determining validity of the object detected by the object detection unit; and a safety management database unit storing the object information for determining the validity of the safety management determination unit.

The detection area formed by the safety management area setting unit includes an entry detection area in which an initial entry of the object is detected and the validity of the detected object is determined so as to approve entry permission of the determined object; an entry waiting area in which the object waits before exiting; and a direction detection area in which a movement direction of the object that has passed the entry waiting area is detected.

The safety management database unit stores an identification number of an authorized wireless device; and the safety management determination unit determines validity of the object by comparing a wireless device identification number of the object entering the entry detection area with an identification number stored in the safety management database unit.

The safety management control module receives object information detected through image analysis of the image frame from the safety management detection module, so as to link the object information for which entry permission is approved with the image information, and create a database of the object information and image information linked each other as priority determination information.

The safety management determination unit calculates an available space size and a number of waiting objects of the entry waiting area, and compares the calculated values with a space size and a number of objects which are predetermined.

Herein, the safety management control module controls the safety management shielding module and a safety management safety module so that the object exits via the direction detection area on the basis of a comparison result between the calculated values and the predetermined values.

The safety management shielding module includes an entryway shielding unit physically controlling entry of the object into the entry waiting area; and an intersection shielding unit physically controlling entry of the object into the direction detection area.

Herein, the safety management control module causes the intersection shielding unit to be closed when a number of objects passing through the direction detection area is same as a number of objects calculated by the safety management determination unit, in the case that the object exits from the entry waiting area toward the direction detection area.

### Advantageous Effects

The safety management system according to an embodiment of the present invention is configured to detect objects in a limited area through a photographing module and a detection module provided on one side of the photographing module, so that when the photographing module or the detection module has an abnormality, the module may be replaced instead of being maintained onsite, thereby reducing onsite maintenance time and work vehicle passage restriction time due to maintenance.

The safety management system is multi-connected to a plurality of wireless devices located within the entry detection area, so that it can quickly determine whether the object is authorized to enter through the identification number of the wireless device.

In addition, the entry time information of multiple work vehicles detected simultaneously in multiple entryway areas is quickly collected and sequentially managed through priority determination information to which metadata including time information and location information is linked, so that priority may be set more accurately,.

### Description of Drawings

FIG. 1 is a diagram showing the configuration of a safety management system, according to an embodiment of the present invention.
FIG. 2 is a diagram showing the configuration of an access management means, according to an embodiment of the present invention.
FIG. 3 is a diagram showing the configuration of an access management detection module, according to an embodiment of the present invention.
FIG. 4 is a diagram showing the configuration of an intersection safety management means, according to an embodiment of the present invention.
FIG. 5 is a diagram showing an intersection safety management means installed in an intersection and access road area, according to an embodiment of the present invention.
FIG. 6 is a diagram showing the configuration of a safety management detection module, according to an embodiment of the present invention.
FIG. 7 is a diagram showing a plurality of detection areas formed by the safety management area setting unit, according to an embodiment of the present invention.
FIG. 8 is a diagram showing the entryway shielding unit being opened when a work vehicle enters the entry detection area, according to an embodiment of the present invention.
FIG. 9 is a diagram showing the process of controlling the entryway shielding unit when a work vehicle enters the entry detection area, according to an embodiment of the present invention.
FIG. 10 is a diagram showing the process of checking whether an object is authorized when a work vehicle enters the entry detection area, according to an embodiment of the present invention.
FIG. 11 is a diagram showing the intersection shielding unit being opened when a work vehicle enters the direction detection area due to the highest priority, according to an embodiment of the present invention.
FIG. 12 is a diagram showing the process of controlling the intersection shielding unit when a work vehicle enters the direction detection area due to the highest priority, according to an embodiment of the present invention.
FIG. 13 is a diagram showing an intersection shielding unit and an entryway shielding unit being opened in other entryway when a work vehicle exits due to the highest priority, according to an embodiment of the present invention.
FIG. 14 is a diagram showing the process of controlling intersection shielding units in other entryways when a work vehicle exits due to the highest priority, according to an embodiment of the present invention.
FIG. 15 is a diagram showing a process of controlling an entryway shielding unit in other entryway when a work vehicle exits due to the highest priority, according to an embodiment of the present invention.
FIG. 16 is a diagram showing a process of controlling a passage restriction of a work vehicle by the intersection safety management means, when detecting objects such as pedestrians or goods, other than work vehicles in the intersection area, according to an embodiment of the present invention.

**[Description of reference numerals]**

| | | | | |
|---|---|---|---|---|
| | 100: | control device | | |
| | 110: | access management means | | |
| | 111: | access management photographing module | 112: | access management detection module |
| | 112a: | access management object detection unit | | |
| | 112b: | access management object determination unit | | |
| | 112c: | access management database unit | | |
| | 113: | access management shield module | | |
| | 114: | access management notifying module | | |
| | 115: | access management control module | | |
| | 120: | intersection safety management means | 121: | safety management photographing module |
| | 121a: | entryway photographing unit | | |
| | 122b: | intersection photographing unit | | |
| | 122: | safety management detection module | 122a: | safety management area setting unit |
| | A1: | entry detection area | | |
| | A2: | entry waiting area | | |
| | A3: | direction detection area | | |
| | 122b: | safety management object detection unit | | |
| | 122c: | safety management determination unit | 122d: | safety management database unit |
| | 123: | safety management shielding module | 123a: | entryway shielding unit |
| | 123b: | intersection shielding unit | | |
| | 124: | safety management notifying module | | |

### Best Mode

Hereinafter, some embodiments of the present invention will be described in detail through exemplary drawings.

When adding reference numerals to components in each drawing, the same components are given the same reference numerals as much as possible even when they are shown in different drawings.

The safety management system according to the present invention is installed in factories, warehouses, etc., to perform an access control function by photographing limited areas, identifying and detecting an object located within the photographed area, detecting the moving speed and direction of the object, and determining whether the object is authorized to enter.

In addition, the system performs a function of setting the priority for work vehicles entering the intersection and restricting passage of objects with the next priority or lower according to the set priority, when photographing the passageways of work vehicles such as forklifts and automated guided vehicles (AGVs).

In addition, the safety management system according to the present invention may perform the above functions using cameras such as existing CCTVs.

The intersection refers to a multi-way intersection with five or more branches, a four-way intersection with four branches, a T-junction (channelized) intersection with three branches, or a road where two or more roads intersect each other at a right angle or an angle close to it.

Hereinafter, the branch of the intersection is referred to as an entryway, and the area where two or more branches intersect is referred to as an intersection.

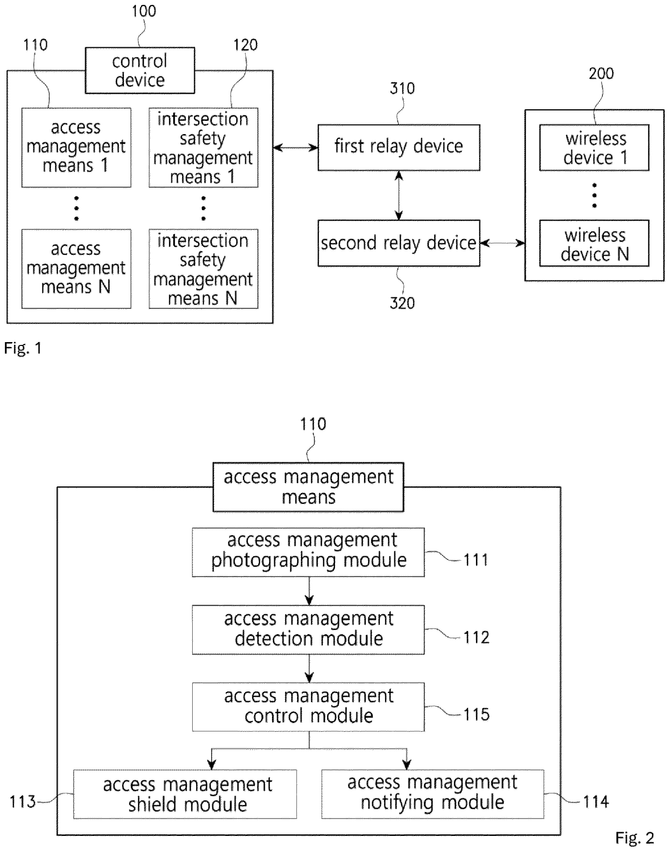

FIG. 1 shows a diagram showing the configuration of a safety management system, according to the present invention. With reference to this, the safety management system is configured to include a control device 100, a wireless device 200, and a relay device to which RF communication or Bluetooth communication technology is applied for communication between the control device 100 and the wireless device 200.

The control device 100 is configured to include an access management means 110 installed at the entrance to an access control area and an intersection safety management means 120 installed at an intersection or an entryway.

The wireless device 200 may be installed on the work vehicle or owned by a pedestrian, and refers to a wireless terminal device capable of receiving visual and auditory information, in which identification numbers for identification between a plurality of wireless devices 200 are stored.

The relay device is configured to include a first relay device 310 connected to a plurality of access management means 110 and a plurality of intersection safety management means 120, and a second relay device connected to the plurality of wireless devices 120. In addition, the first relay device 310 and the second relay device 320 are interconnected to transmit and receive the information in real time.

The first relay device 310 is installed in a position where the access management means 110 or the intersection safety management means 120 are located, to be connected to one or more of the access management means 110 and the intersection safety management means 120 which are located within a certain distance.

The second relay device 300 may be multi-connected to a plurality of wireless devices 200 located within a certain distance through Bluetooth multipoint.

FIG. 2 shows a diagram showing the configuration of access management means 110, according to an embodiment of the present invention. With reference to FIG. 2, the access management means 110 is configured to include an access management photographing module 111, an access management detection module 112, an access management shield module 113, an access management notifying module 114, and an access management control module 115.

The access management photographing module 111 may be configured to include a fixed or PTZ (Pan-Tilt-Zoom) camera to photograph a waiting space before an object enters or exits an access control area.

The access management detection module 112 identifies the object in the space photographed by the access management photographing module 111 and detects information on the object.

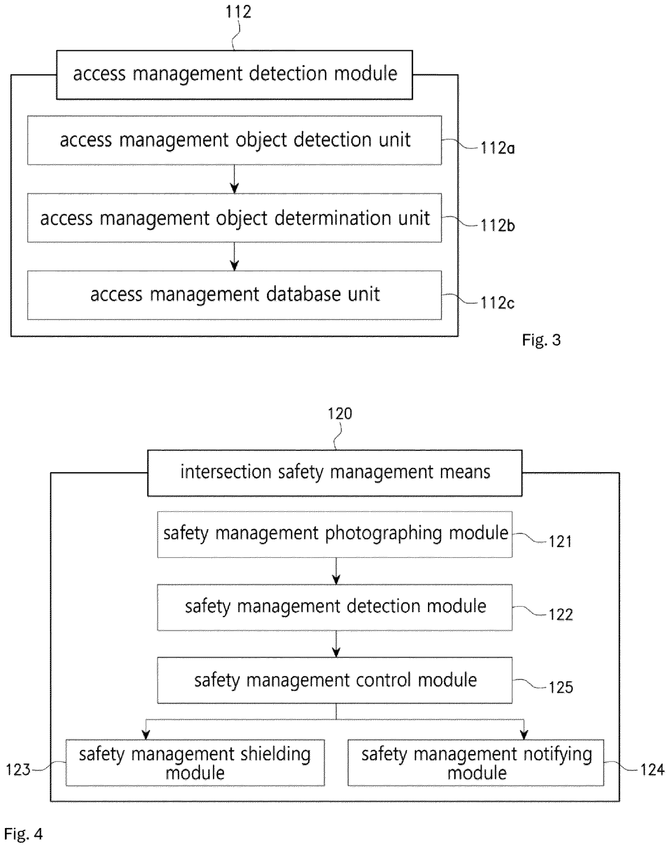

FIG. 3 shows a diagram showing the configuration of the access management detection module 112, according to an embodiment of the present invention. With reference to this, the access management detection module 112 is configured to include an access management object detection unit 112a, an access management object determination unit 112b, and an access management database unit 112c.

The access management object detection unit 112a detects an object entering the area photographed by the access management photographing module 111, and tracks the object when the detected object moves within the area.

In addition, the access management object detection unit 112a may detect flames, smoke, abnormal behavior (falling down, etc.) of objects, etc.

The access management object determination unit 112b determines the validity (hereinafter, referred to as 'first validity') for enter and exit the access control area of the object detected by the access management object detection unit 112a.

The first validity refers to determining whether the object is authorized to enter or exit the access control area into/from which it tries to enter and exit.

The access management database unit 112c is configured to include face of the object and identification information on the wireless device 200 owned by the object, for the purpose of the determination of the first validity.

The access management shield module 113 physically controls entry and exit of the detected object into/from the access control area.

The access management notifying module 114 is installed at the entrance to the access control area to provide visual and auditory information to the object which tries to enter and exit.

In addition, the information provided by the access management notifying module 114 may include access permission, access denial, and access waiting due to a validity determination failure.

The access management control module 115 receives object information from the access management detection module 112, and transmits a signal for controlling the access management shield module 113 and the access management notifying module 114 on the basis of the received information.

Herein, the access management control module 115 may receive information on the wireless device 200 owned by the object through the first relay device 310 and the second relay device 320, and transmit information generated by the access management notifying module 114 to the wireless device 200.

In addition, when flames, smoke, abnormal behavior of objects, etc. are detected at the entrance to the access control area by the access management detection module 112, the access management control module 115 may transmit detected information to the central system.

FIG. 4 shows a diagram showing the configuration of the intersection safety management means 120, according to an embodiment of the present invention. With reference to this, the intersection safety management means 120 is configured to include a safety management photographing module 121, a safety management detection module 122, a safety management shielding module 123, a safety management notifying module 124, and a safety management control module 125.

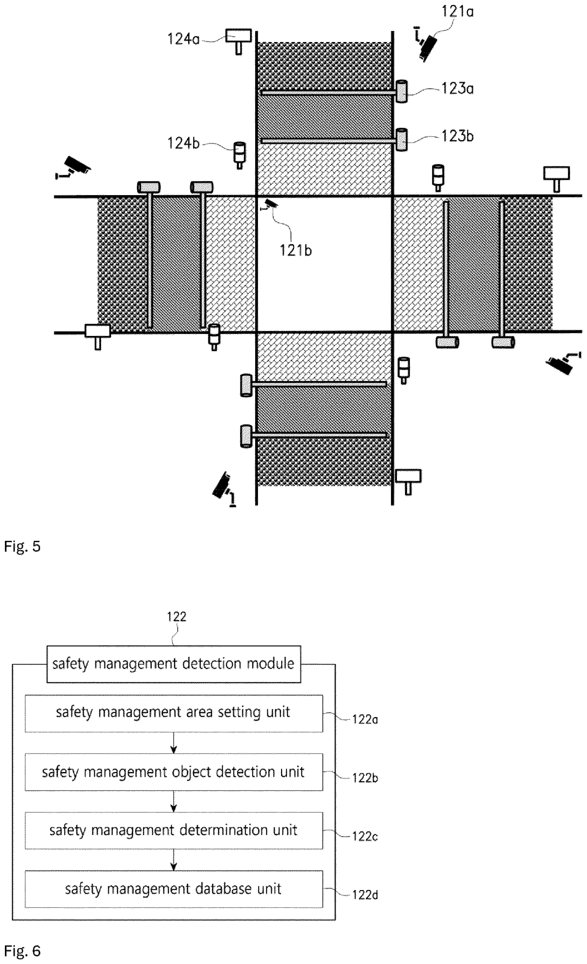

FIG. 5 shows a diagram showing intersection safety management means installed at intersection and entryway areas, according to an embodiment of the present invention.

With reference to this, the safety management photographing module 121 is configured to include an entryway photography unit 121a installed in the entryway area and an intersection photography unit 121b installed in the intersection area, and may be configured with a fixed or PTZ (Pan-Tilt-Zoom) camera.

The entryway photography unit 121a may be configured with a plurality of units depending on the number of intersection branches, as shown in FIG. 5.

The entryway photography unit 121a generates an image frame for the entryway area and calculates image information obtained by linking metadata to the image frame, in which the metadata includes time information and location information.

The time information may include information on time when the object has been detected, entry time information, exit time information, day/night classification information, day of the week information, season information, etc.

The location information may include ID information of the entryway photography unit 121a, entryway ID information, etc.

The safety management detection module 122 detects object information in the image frame generated by the safety management photographing module 121, in which the object information may include work vehicle type, work vehicle number, etc.

FIG. 6 shows a diagram showing the configuration of the safety management detection module 122, according to an embodiment of the present invention. With reference to this, the safety management detection module 122 is configured to include a safety management area setting unit 122a, a safety management object detection unit 122b, a safety management determination unit 122c, and a safety management database unit 122d.

The safety management area setting unit 122a allows a plurality of detection areas to be formed in the area photographed by the entryway photography unit 121a.

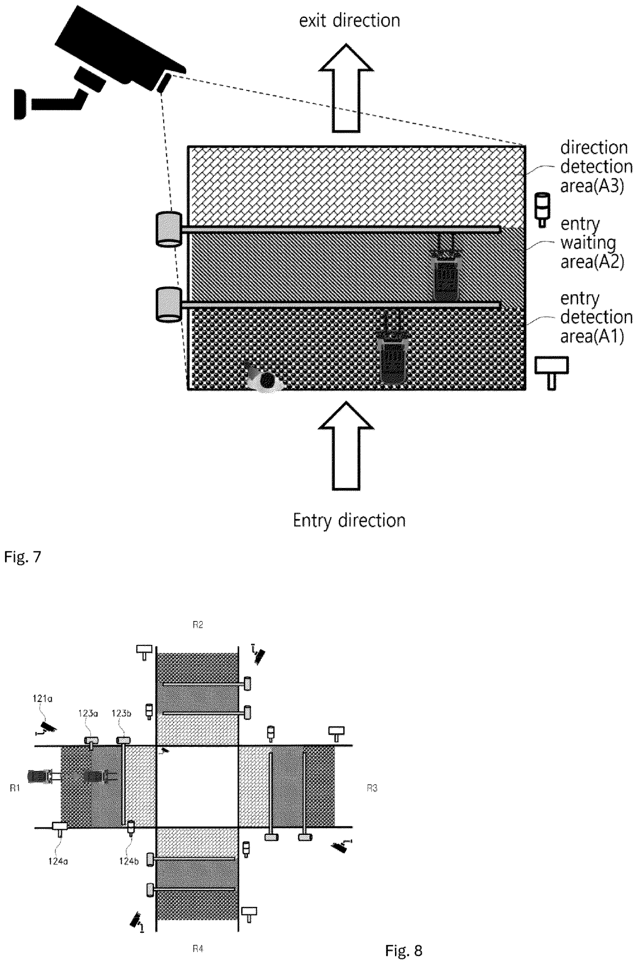

FIG. 7 shows a diagram showing a plurality of detection areas formed by the safety management area setting unit 122a.

With reference to this, the plurality of detection areas are configured to include an entry detection area A1 in which the initial entry of an object is detected, the validity of the detected object is determined, to approve entry permission for the determined object, an entry waiting area A2 in which the object waits before being exiting to the intersection, and a direction detection area A3 in which the moving direction of the object that has been passed the entry waiting area A1 is detected.

The safety management object detection unit 122b may track and detect the object which enters the detection area, and also detect flames, smoke, and the like within the detection area.

The safety management determination unit 122c may identify the object detected by the safety management object detection unit 122b, determine the validity (hereinafter, referred to as "second validity") of entry of the detected object into the intersection, and calculate the number of work vehicles located within the entry waiting area A2 and the size of available space.

The second validity refers to whether the work vehicle is authorized to enter the intersection, when the detected object is a work vehicle. In other words, when the detected object is not a work vehicle, but a pedestrian, bicycle rider, etc., the second validity determination may not be performed by the safety management determination unit 122c.

In addition, the safety management determination unit 122c may compare the number of work vehicles located in the entry waiting area A2 with the predetermined number of vehicles, and also compare the size of the available space in the entry waiting area A2 with the predetermined size of the waiting space.

The safety management database unit 122d includes a type and number of the work vehicle and identification information on the wireless device 200 installed on the work vehicle, for the purpose of the second validity determination.

The safety management shielding module 123 includes an entryway shielding unit 123a that physically controls entry of objects into the entry waiting area A1, and an intersection shielding unit 123b that physically controls the entry of objects into the direction detection area A3.

The safety management notifying module 124 provides visual and auditory information to the object, and is configured to include an entryway notifying unit 124a installed on one side of the entry waiting area A2 to provide the information to an object which tries to enter the entry waiting area A2, and an intersection notifying unit 124b installed on one side of the direction detection area entry waiting area A3 to provide the information to an object which tries to enter the intersection.

The information provided by the entryway notifying unit 124a may include entry permission, entry denial for unauthorized work vehicles, entry denial due to work vehicles entering in other direction, movement denial due to objects other than work vehicles within the entryway, and waiting-for-entry due to failure in validity determination.

The information provided by the intersection notifying unit 124b may include exit permission, exit denial due to work vehicles entering in another direction, and movement denial due to objects other than work vehicles within the intersection.

The safety management control module 125 receives object information detected through image analysis of the image frame from the safety management detection module 122, to associate information on an object for which entry permission has been approved with image information calculated from the safety management photographing module 121.

Then, the associated object information and image information are converted into a database as priority decision information.

In addition, the safety management control module 125 sets the priority for passage of the objects on the basis of information on the entry time of the object into the entry waiting area A2, which is stored in the priority determination information, and controls the safety management shielding module 123 and the safety management notifying module 124 according to the set priority to restrict the passages of work vehicles with the next priority or lower.

In addition, when objects such as pedestrians, bicycles, or goods other than work vehicles are detected in the intersection area, the safety management control module 125 controls the safety management shielding module 123 and the safety management notifying module 124 in all entryway areas on the basis of the detected information, to restrict the passage of work vehicles.

In addition, when objects such as pedestrians, bicycles, or goods other than work vehicles are detected in the entryway area, the safety management control module 125 controls the safety management shielding module 123 and safety management notifying module 124 in the corresponding entryway area on the basis of the detected information, to restrict the passage of work vehicles traffic.

In addition, the safety management control module 125 may receive identification information about the wireless device 200 owned by the object through the first relay device 310 and the second relay device 320, and transmit alarm information generated by the safety management notifying module 124 to the wireless device 200.

In addition, when flames, smoke, etc. are detected at the entrance to the access control area from the safety management detection module 122, the safety management control module 125 may transmit the detected information to the central system.

FIG. 8 is a diagram showing the entryway shielding unit 123a being opened when a work vehicle enters the entry detection area A1 according to an embodiment of the present invention.

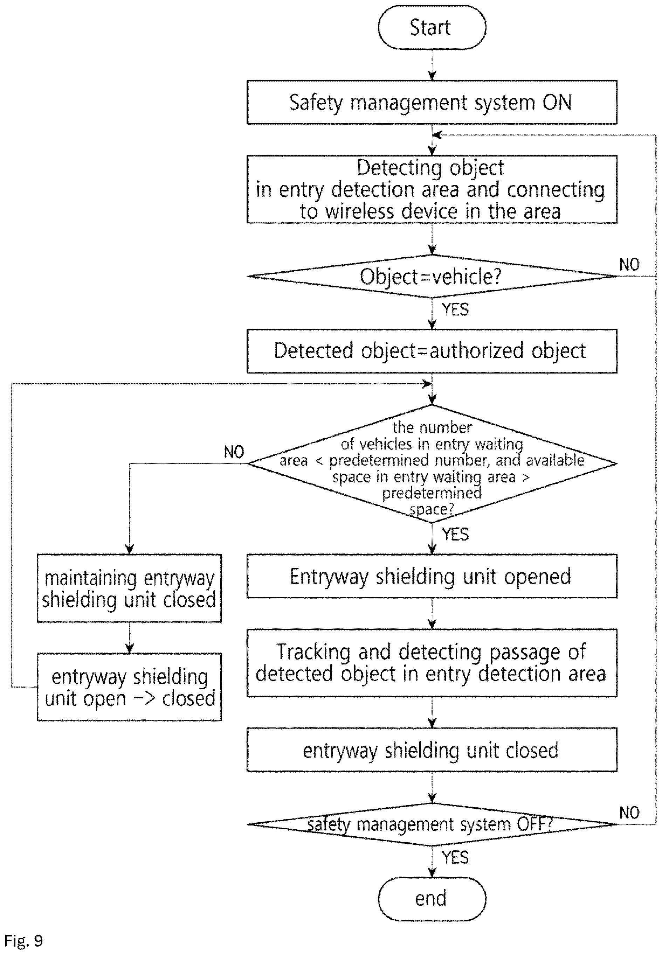

FIG. 9 shows a diagram showing a process in which the entryway shielding unit 123a is controlled by the safety management control module 125 when a work vehicle enters the entry detection area A1, according to an embodiment of the present invention.

Referring to FIGS. 8 and 9, when an object entering the entry detection area A1 is identified as a work vehicle, the safety management detection module 122 installed in an entryway R1 determines the second validity of whether the work vehicle is authorized to enter.

When the wireless device 200 is located within the entry detection area A1, the second relay device 320 attempts to connect with the wireless device.

Alternatively, the second relay device 320 may attempt to connect with the wireless device 200 located in the entry detection area A1, when an object is detected in the entry detection area A1 by the safety management object detection unit 122a.

Herein, the second relay device 320 located in the intersection or entryway area may be preferentially connected to the wireless device 200 installed on the work vehicle, while it may be simultaneously connected to a plurality of wireless devices 200 owned by the work vehicle and pedestrians when there are multiple work vehicles and pedestrians in the entry detection area A1. In addition, the connection is maintained until the object exits the intersection and entryway areas.

When the work vehicle which tries to enter the entry detection area A1 is authorized to enter, the safety management object detection unit 122a detects work vehicles located within the entry waiting area A2 and available space, and transmits the detected information to the safety management determination unit 122b.

The safety management determination unit 122b compares the number of work vehicles in the entry waiting area A2 with the predetermined number of vehicles and compares the size of the available space with the predetermined size of waiting space, on the basis of the received detection information.

As shown in FIG. 8, when the number of work vehicles is less than the predetermined number of vehicles, and the size of the available space in the entry waiting area A2 is larger than the predetermined size of waiting space, the entryway shielding unit 123a is opened.

Herein, the safety management object detection unit 122a continuously tracks and detects objects within the photographing area, and transmits the entry time and a vehicle number of the work vehicle to the safety management control module 125 when a work vehicle is permitted to enter the entry waiting area A2 and thus enters the same. In addition, when the work vehicle passes the entry detection area A1, the entryway shielding unit 123a is closed.

When the number of work vehicles is greater than the predetermined number of vehicles or the size of the available space in the entry waiting area A2 is smaller than the predetermined size of waiting space, the entryway shielding unit 123a maintains closed. In addition, when the intersection shielding unit 123b installed in the entryway R1 is opened and then closed, the safety management determination unit 122b compares the number of work vehicles and the size of available space within the entry waiting area A2 with predetermined values again.

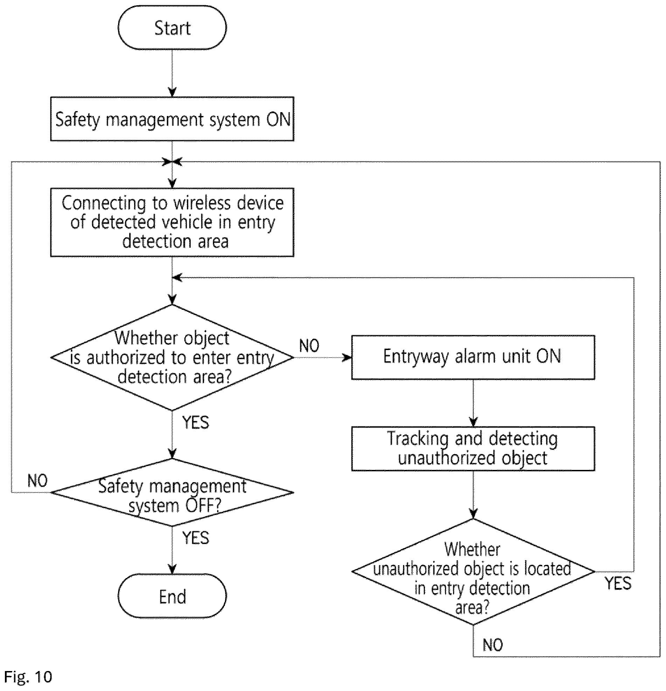

FIG. 10 is a diagram showing the process of checking whether object entry is authorized when a work vehicle enters the entry detection area A1, according to an embodiment of the present invention.

With reference to FIG. 10, the second relay device 320 is connected to one or more wireless devices 200 located within the entry detection area A1.

When the work vehicle is not authorized to enter the entry detection area A1, the safety management control module 125 maintains the entryway shielding unit 123a in a closed state, and visually and audibly provides entry denial information to the unauthorized work vehicles through the entryway notifying unit 124a. In addition, the entry denial information is also transmitted to the wireless device 200.

The safety management object detection unit 122a tracks and detects the unauthorized work vehicles located within the entry detection area A1, and when the work vehicle is not detected in the detection area, the second relay device 320 disconnects the work vehicle from the wireless device 200.

The safety management determination unit 122b determines the second validity of other work vehicles detected within the entry detection area A1.

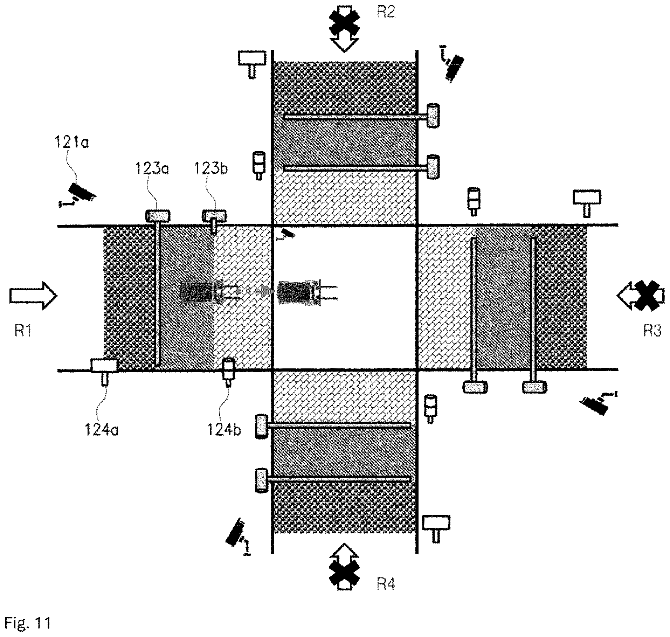

FIG. 11 shows a diagram showing the intersection shielding unit 123b being opened when a work vehicle enters the direction detection area A3 due to the highest priority, according to an embodiment of the present invention.

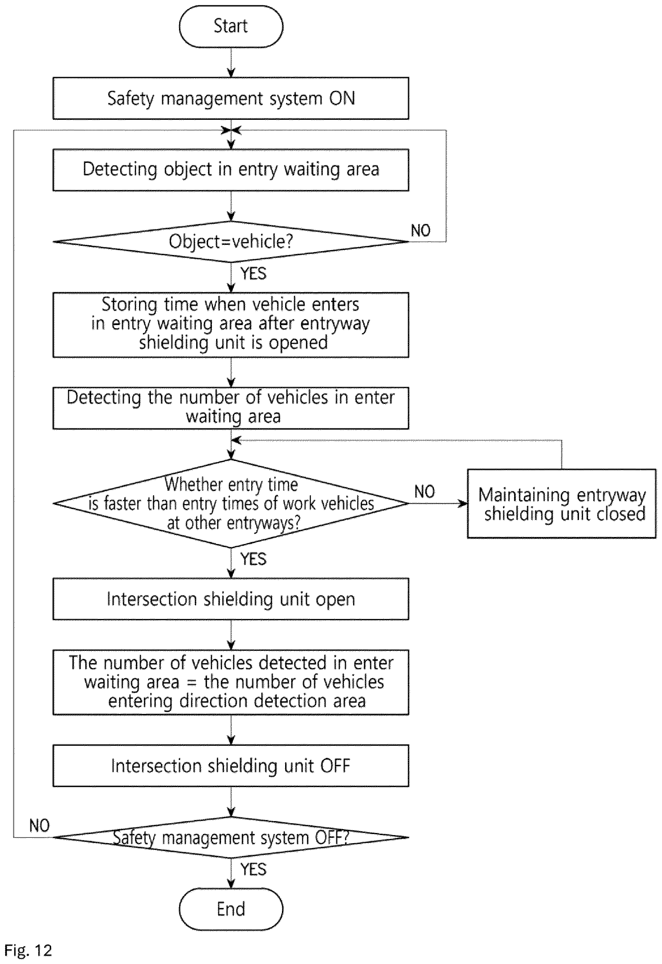

FIG. 12 is a diagram showing the process of controlling the intersection shielding unit when a work vehicle enters the direction detection area due to the highest priority, according to an embodiment of the present invention.

Referring to FIGS. 11 and 12, the safety management detection module 122 installed in the entryway R1 detects work vehicles entering the entry waiting area A2 and calculates the number of work vehicles waiting in the entry waiting area A2.

In addition, the safety management control module 125 sets priority by comparing information on the entry time of the work vehicle detected through the priority determination information with information on the pre-stored entry times of the work vehicles in other entryways.

Additionally, when the entry time of the work vehicle received from the safety management detection module 122 of the entryway R1 is faster than the entry times of the work vehicles at entryways R2 to R4, the safety management control module 125 allows the intersection shielding unit 123b of the entryways R2 to R4 to be maintained in a closed state and the intersection shielding unit 123b of the entryway R1 to be opened.

When the entry time in the entryway R1 is the next priority, the intersection shielding unit 123b of the entryway R1 maintains closed.

After the intersection shielding unit 123b in the entryway R1 is opened, the safety management object detection unit 122a tracks and detects a work vehicle moving from the entry waiting area A2 into the direction detection area A3.

In addition, when the number of work vehicles passing through the entry waiting area A2 and moving to the direction detection area A3 is equal to the number of work vehicles waiting in the entry waiting area A2, the intersection shielding unit 123b in entryway R1 is closed.

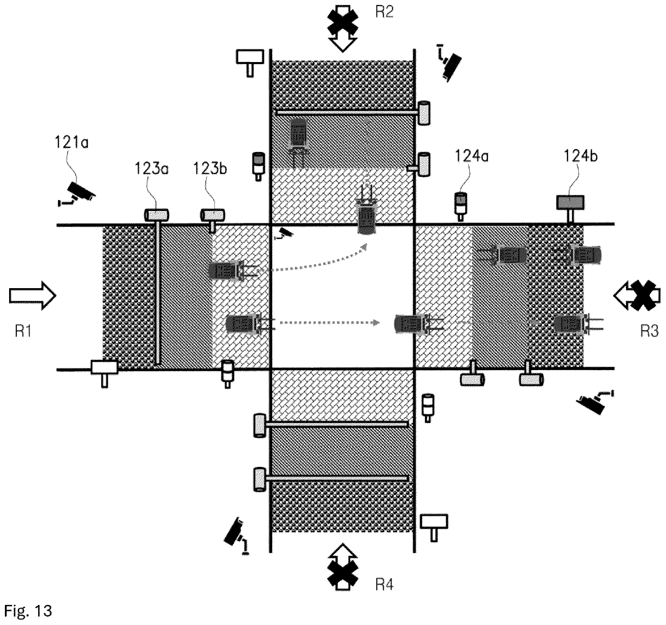

FIG. 13 is a diagram showing an intersection shielding unit and an entryway shielding unit in other entryway being opened when a work vehicle exits with the highest priority, according to an embodiment of the present invention.

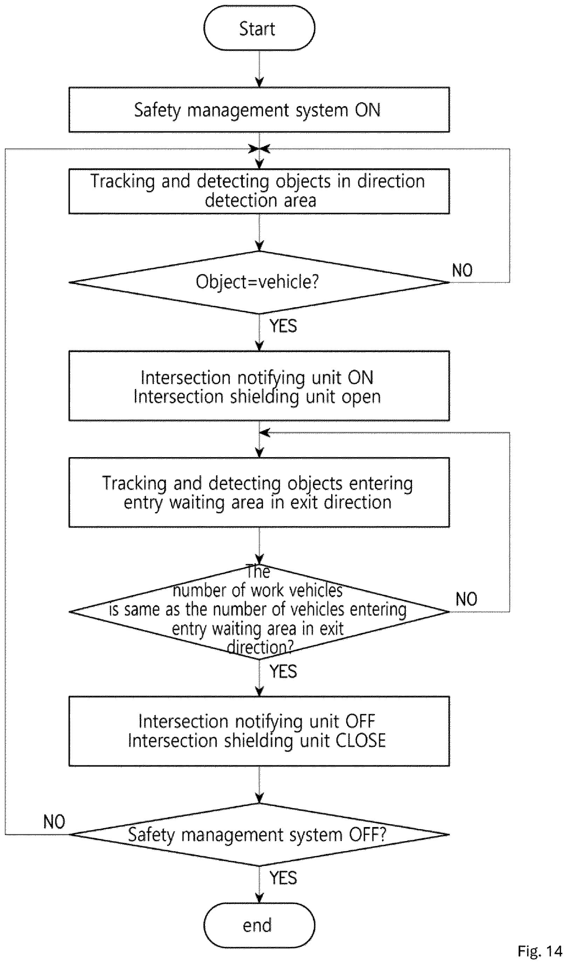

FIG. 14 is a diagram showing the process of controlling intersection shielding units in other entryways when a work vehicle exits with the highest priority, according to an embodiment of the present invention.

Referring to FIGS. 13 and 14, the entryway R1 is set as the highest priority of entering the intersection, so that the intersection shielding unit 123b in the entryway R1 is opened by the safety management control module 125, and one or more work vehicles located in the entry waiting area A1 in the entryway R1 move to the entryways R2 and R3.

Herein, when the intersection shielding unit 123b is opened, the safety management control module 125 closes the entryway shielding units 123a and the intersection shielding units 123b located in the remaining entryways except the entryway where the opened intersection shielding unit 123b is located.

When the work vehicle tracked and detected by the safety management object detection unit 122a is detected in the direction detection area A3 in an entryway other than the entryway where the opened intersection shielding unit 123b is installed, the intersection shielding unit 123b of the corresponding entryway is opened.

In addition, the work vehicles waiting in the entry waiting area A2 in the corresponding entryway are audibly and visually provided with exit denial information caused due to work vehicles entering in the other direction through the intersection notifying unit 124b and the wireless device 200.

In addition, when the number of work vehicles tracked and detected by the safety management object detection unit 122a is same as the number of vehicles entering the entry waiting area A2 in the exit direction, the safety management control module 125 prohibits the operation of the intersection notifying unit 124b to allow the intersection shielding unit 123b to be closed.

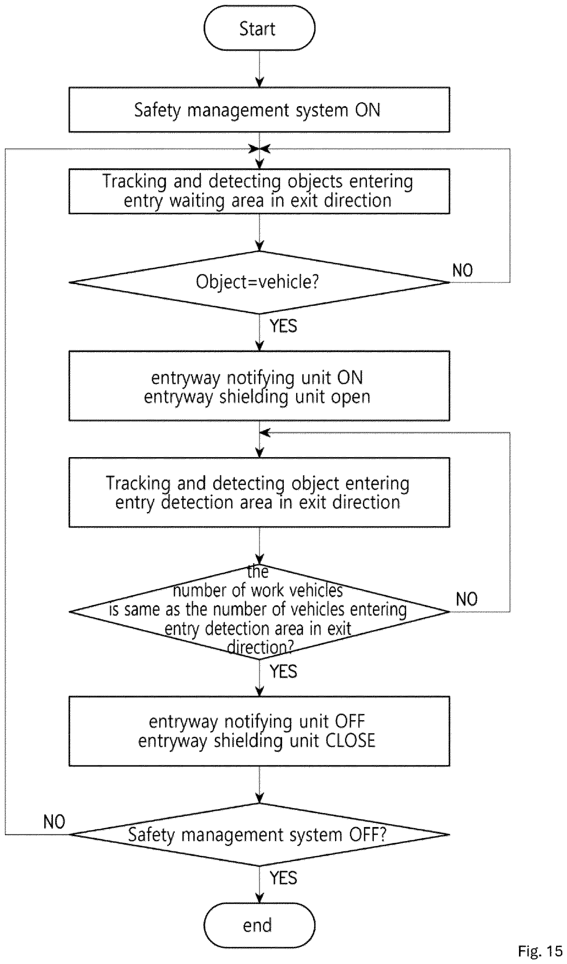

FIG. 15 is a diagram showing a process of controlling an entryway shielding unit in other entryway when a work vehicle exits with the highest priority, according to an embodiment of the present invention.

With reference to FIG. 15, when the work vehicle tracked and detected by the safety management object detection unit 122a enters the entry waiting area A2, the safety management control module 125 allows the entryway shielding unit 123a to be opened, and audibly and visually provides entry denial information caused due to work vehicles entering in other direction to the work vehicles waiting and entering in the entry detection area A1, using the entryway notifying unit 124a and wireless device 200.

When the number of work vehicles tracked and detected by the safety management object detection unit 122a is same as the number of vehicles passing in the exit direction after entering the entry detection area A1, the safety management control module 125 prohibits the operation of the entryway notifying unit 124a to allow the entryway shielding unit 123a to be closed.

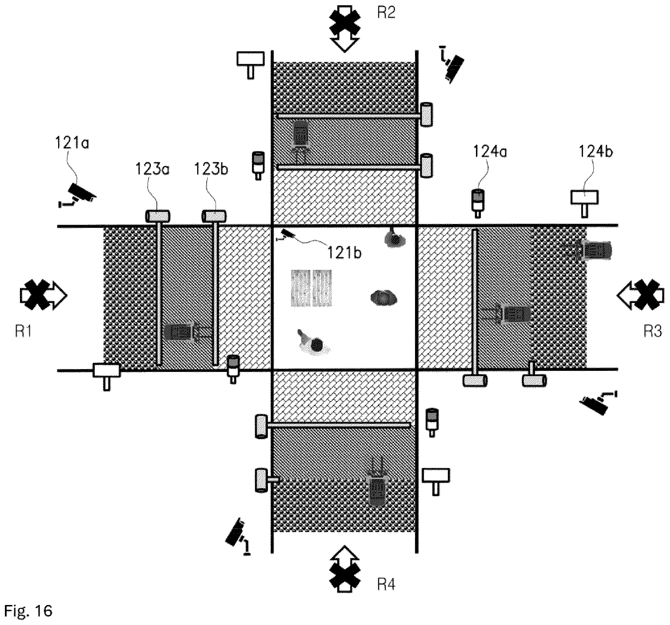

FIG. 16 is a diagram showing a process of controlling a passage restriction of a work vehicle by the intersection safety management means, when detecting objects such as pedestrians or goods, other than work vehicles in the intersection area, according to an embodiment of the present invention.

With reference to FIG. 16, when an object, a pedestrian and the like, other than work vehicles are detected within the areas photographed by the entryway photography unit 121a or the intersection photography unit 121b, or a work vehicle that has stopped for a predetermined stopping time is detected, the safety management detection module 122 transmits the corresponding detection information to the safety management control module 125.

As shown in FIG. 16, when an object is detected within the areas photographed by the intersection photography unit 121b, the safety management control module 125 closes the intersection shielding unit 123b installed in the entryways R1 to R4, and visually and audibly provides corresponding information to the work vehicles waiting in the entry waiting area A2 using the intersection notifying unit 124b and the wireless device 200.

Like this, the safety management control module 125 controls the safety management shielding module 123 and the safety management alarm module 124 installed in the entryways R1 to R4 on the basis of the transmitted detection information.

The scope of the present invention should be construed as including all changes or modified forms derived based on the technical idea of the present invention in addition to the embodiments disclosed herein.

### Industrial availability

The safety management system according to the present invention is installed in a place where work vehicles and workers pass, to control traffic flow within a business by setting the priority of passing objects and restricting the passage of objects with the next priority or lower.

That is, the present invention can not only quickly transport logistics, but also prevent safety accidents caused due to collisions between work vehicles and workers, which frequently occur, by controlling traffic flow between work vehicles in workplaces such as factories, warehouses, and distribution centers, to prevent traffic congestion.

Therefore, since the present invention is a technology that can create demand in various industries such as manufacturing, construction, and warehousing, it is expected to have very high industrial availability.

## Claims

1. A safety management system, comprising:
a safety management photographing module photographing a limited area;
a safety management detection module detecting an object entering the area and information on the object;
a safety management shielding module positioned in the area so as to physically control a movement of the object;
a safety management alarm module positioned to be adjacent to the area so as to provide a visual or audible warning alarm;
a safety management control module receiving object information from the safety management detection module, setting passage priority for the object on the basis of the object information, and controlling the safety management shielding module and the safety management alarm module according to the set priority so as to restrict passage of an object with a next priority or lower,
wherein the safety management detection module comprises:
a safety management area setting unit provided in the safety management photographing module to form a plurality of detection areas in a photographing area;
a safety management object detection unit detecting the object entering the detection areas;
a safety management determination unit determining validity of the object detected by the object detection unit; and
a safety management database unit storing the object information for determining the validity of the safety management determination unit;
wherein the detection area comprises:
an entry detection area in which an initial entry of the object is detected and the validity of the detected object is determined so as to approve entry permission of the determined object;
an entry waiting area in which the object waits before exiting; and
a direction detection area in which a movement direction of the object that has passed the entry waiting area is detected; and
wherein the passage priority of the object is set sequentially on the basis of a time to entry into the entry waiting area.

2. The system of claim 1, further comprising:
a wireless device provided in the object so as to receive information on an alarm from the safety management control module; and
a relay device provided to transmit and receive information between the safety management control module and the wireless device,
wherein the relay device multi-connects to one or more wireless communications located in the entry detection area.

3. The system of claim 2,
wherein the safety management database unit stores an identification number of an authorized wireless device; and
wherein the safety management determination unit determines validity of the object by comparing a wireless device identification number of the object entering the entry detection area with an identification number stored in the safety management database unit.

4. The system of claim 1,
wherein the safety management photographing module generates an image frame for the photographing area and calculates image information obtained by linking metadata including time information and location information to the image frame; and
wherein the safety management control module receives object information detected through image analysis of the image frame from the safety management detection module, so as to link the object information for which entry permission is approved with the image information, and create a database of the object information and image information linked each other as priority determination information.

5. The system of claim 1,
wherein the safety management determination unit calculates an available space size and a number of waiting objects of the entry waiting area, and compares the calculated values with a space size and a number of objects which are predetermined; and
wherein the safety management control module controls the safety management shielding module and a safety management safety module so that the object exits via the direction detection area on the basis of a comparison result between the calculated values and the predetermined values.

6. The system of claim 1,
wherein the safety management determination unit calculates a number of objects waiting in the entry waiting area;
wherein the safety management shielding module comprises:
an entryway shielding unit physically controlling entry of the object into the entry waiting area; and
an intersection shielding unit physically controlling entry of the object into the direction detection area; and
wherein the safety management control module causes the intersection shielding unit to be closed when a number of objects passing through the direction detection area is same as a number of objects calculated by the safety management determination unit, in the case that the object exits from the entry waiting area toward the direction detection area.
